(19) Europäisches Patentamt
European Patent Office
Office européen des brevets

(11)  EP 2 288 823 B1

(12)  **FASCICULE DE BREVET EUROPEEN**

(45) Date de publication et mention
de la délivrance du brevet:
**31.07.2013   Bulletin 2013/31**

(21) Numéro de dépôt: **09784399.9**

(22) Date de dépôt: **08.06.2009**

(51) Int Cl.:
*F16H 61/02* *(2006.01)*          *F16H 59/66* *(2006.01)*

(86) Numéro de dépôt international:
**PCT/FR2009/051075**

(87) Numéro de publication internationale:
**WO 2010/007268 (21.01.2010 Gazette 2010/03)**

(54) **PROCEDE ET SYSTEME DE COMMANDE D'UNE TRANSMISSION AUTOMATIQUE DE VEHICULE EN FONCTION DU PROFIL DE LA ROUTE**

VERFAHREN UND SYSTEM ZUR STEUERUNG EINES FAHRZEUGAUTOMATIKGETRIEBES ALS FUNKTION EINES STRASSENPROFILS

METHOD AND SYSTEM FOR CONTROLLING A VEHICLE AUTOMATIC TRANSMISSION AS A FUNCTION OF THE PROFILE OF THE ROAD SURFACE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **24.06.2008   FR 0854182**

(43) Date de publication de la demande:
**02.03.2011   Bulletin 2011/09**

(73) Titulaire: **Renault s.a.s.**
**92100 Boulogne-Billancourt (FR)**

(72) Inventeur: **VANDEKERKHOVE, Rémi**
**F-75012 Paris (FR)**

(74) Mandataire: **Rougemont, Bernard**
**Renault Technocentre**
**Département Propriété Intellectuelle**
**Sce 00267 TCR GRA 2 36**
**1 Avenue du Golf**
**78288 Guyancourt Cedex (FR)**

(56) Documents cités:
**DE-A1- 4 440 706          FR-A- 2 801 952**
**US-A1- 2007 118 267**

**Description**

La présente invention concerne un procédé et un système permettant l'évaluation du profil de la route sur laquelle roule un véhicule, afin de déterminer le rapport de transmission le mieux adapté. Sur les portions de routes montantes, le système a pour but d'arbitrer si le véhicule se trouve sur une pente ascendante prolongée ou s'il vient de franchir une pente occasionnelle, afin de décider si un changement de rapport est opportun ou non.

Dans les systèmes connus de gestion de transmissions automatiques, les décisions de changement ou de variation de rapport de transmission sont prises lorsque le point de fonctionnement de la transmission dans le plan de coordonnées vitesse véhicule, charge moteur (position pédale d'accélérateur, couple moteur, puissance...) croise une courbe de passage montant ou une courbe de passage descendant. Dans cette représentation, l'ensemble des courbes de passage montants et descendants définit une loi de passage.

Sur ces principes de base ont été développés des principes d'adaptation du fonctionnement de la transmission à son environnement, notamment à la pente de la route parcourue. L'adaptation à la montée se traduit par des passages montants et descendants qui s'effectuent à des régimes plus élevés : dans les zones de bas régime, le couple moteur maximum disponible est relativement faible ; le fait d'effectuer les passages montants ou descendants à plus haut régime permet de supprimer les zones de bas régime et ainsi de profiter d'une plus grande réserve de couple ou de puissance moteur.

Ainsi, la demande de brevet FR2801952 déposée par la demanderesse propose d'estimer la pente en fonction du couple moteur, de l'accélération du véhicule constatée et des efforts résistants estimés. La pente $P_e$ calculée est ensuite comparée à des valeurs de seuils, pour sélectionner la loi de passage adaptée à une route plate, une route en montée ou une route en descente.

Dans les cas des longues montées que l'on rencontre dans les routes de montagne (ascension d'un col), on rencontre régulièrement des portions de route planes. Dans ces portions planes, la boîte automatique applique sans délai la loi de passage adaptée aux routes planes. L'écroulement du régime crée une rupture dans l'ambiance acoustique dans l'habitacle. En outre, la réserve de puissance diminue de manière importante. Si la portion de route plane est courte et que la pente s'élève à nouveau juste après, la transmission automatique ne rebascule ra sur une loi de passage adaptée à la montée que quelques secondes après le retour en pente. Le manque de réserve de puissance résultant de l'application temporaire d'une loi de passage adaptée au plat est ressenti comme une gêne par le conducteur, ainsi que les variations d'ambiance acoustique.

Il y a donc un besoin pour une stratégie de commande de boîte automatique qui permette au véhicule de circuler sur ce type de relief, en limitant les changements prononcés et répétitifs de rapports de transmission, changements qui sont sources de perte d'efficacité et d'inconfort pour le conducteur.

La demande de brevet US 2006/0030992 propose d'utiliser deux cartographies reliant respectivement la vitesse du véhicule et le couple moteur, la vitesse du véhicule et la consigne d'accélérateur, dont on extrait des lois de passage a priori, indépendantes de la pente de la route. Les changements de rapports sont limités quand le véhicule se trouve dans une zone interdite par une troisième cartographie, reliant la vitesse du véhicule et la pente de la route, afin d'éviter d'alterner trop souvent le changement entre deux rapports consécutifs en pente. Ce document n'aborde pas le problème de la rupture de pente en route de montagne.

La demande de brevet US 2007/0118267, qui révèle les éléments selon le préambule des revendications 1 et 8, propose de prendre en compte, en plus de la valeur de la pente courante, une valeur filtrée de la pente, pour décider si un changement de rapport doit avoir lieu ou non. Dans le cas d'une atténuation de la pente, le basculement sur la loi de passage adaptée au plat ne se fait que si les deux valeurs de pente descendent en dessous d'un seuil de pente prédéfini. De ce fait, le changement de loi de passage est retardé lors du retour sur route plane, voire annulé si la portion de route plane est courte.

Aucune des solutions proposées dans l'état de l'art ne propose de solution pleinement satisfaisante pour gérer les ruptures temporaires de pente sur routes montantes.

L'invention a pour but un procédé et un système de commande fiable et robuste de gestion de commande de transmission automatique, permettant de limiter les désagréments de changements de rapports brusques et répétitifs en route de montagne.

L'invention a pour objet un procédé de commande d'une transmission automatique de véhicule automobile en fonction du profil de la chaussée sur laquelle se déplace le véhicule, comprenant une opération de détermination de la pente courante de la chaussée, une opération de filtrage de cette pente courante pour obtenir une pente moyenne calculée, caractérisé en ce que l'on compare la pente courante à un premier seuil et à un second seuil inférieur au premier, et l'on compare la pente moyenne calculée à un troisième seuil inférieur aux deux seuils précités, de façon à imposer à la transmission au moins une loi de passage de montée si la pente courante est supérieure au premier seuil, au moins une loi de passage de terrain horizontal si la pente courante et la pente moyenne calculée sont inférieures respectivement au second et au troisième seuil, et au moins une loi de passage intermédiaire entre la loi de montée et la loi de terrain horizontal si la pente courante est inférieure au second seuil et simultanément la pente moyenne calculée est supérieure au troisième seuil.

Avantageusement, le choix de la loi de passage à un instant t est en outre fonction de la loi de passage appliquée à l'instant de calcul précédent cet instant t.

Dans une variante de mise en oeuvre du procédé, le filtrage de la pente courante est effectué avec au moins une première constante de temps quand la pente moyenne calculée est croissante, et avec au moins une deuxième constante de temps inférieure à la première quand la pente moyenne calculée est décroissante.

Selon un mode de mise en oeuvre préféré du procédé, la pente moyenne calculée est arbitrairement maintenue au dessus d'une valeur minimale.

Selon un mode de mise en oeuvre du procédé qui peut se combiner au précédent, la pente moyenne calculée est arbitrairement maintenue en dessous d'une valeur maximale.

Dans une variante de mise en oeuvre du procédé, on compare en outre la valeur algébrique de la pente courante à un quatrième seuil négatif, et l'on impose à la transmission au moins une loi de passage de descente différente des trois lois de passage précitées quand la pente courante est inférieure audit quatrième seuil.

De manière préférentielle, l'estimation de la pente courante est effectuée en fonction de la masse du véhicule, des inerties du moteur et de la boîte de vitesse du véhicule, du couple du moteur, de la dérivée de la vitesse longitudinale du véhicule, du rapport de la transmission, à l'aide d'une cartographie des efforts résistants auxquels est soumis le véhicule en fonction de sa vitesse.

L'invention a également pour objet un système de commande d'une transmission automatique de véhicule automobile comprenant un moyen d'estimation du couple du moteur et un moyen d'estimation de l'accélération du véhicule, une cartographie des efforts résistants auxquels est soumis le véhicule en fonction de sa vitesse, des cartographies mémorisées de lois de passage de la transmission adaptées à différents profils routiers, et un système de sélection de lois de passage configuré pour déterminer, à l'aide dudit couple moteur, de ladite accélération, de ladite cartographie d'efforts résistants, et du rapport de transmission engagé, une pente courante de la chaussée sur laquelle se déplace le véhicule, caractérisé en ce que ledit système de sélection de lois de passage comporte un filtre délivrant une valeur moyenne de cette pente courante, et ledit système de sélection de lois de passage est configuré pour imposer à la transmission au moins une loi de passage de montée si la pente courante est supérieure à un premier seuil, au moins une loi de passage de terrain horizontal si la pente courante et la valeur moyenne de pente sont inférieures respectivement à un deuxième seuil inférieur au premier et à un troisième seuil inférieur au deuxième, et au moins une loi de passage intermédiaire entre la loi de montée et la loi de terrain horizontal si la pente courante est inférieure au deuxième seuil et simultanément la valeur moyenne de pente est supérieure au troisième seuil.

Selon un mode de réalisation préféré, le filtre est relié à un sélecteur de constante de temps configuré pour sélectionner une première constante de temps quand la valeur moyenne de pente est croissante, et pour sélectionner une deuxième constante de temps inférieure à la première quand la valeur moyenne de pente est décroissante.

Avantageusement, le filtre est apte à imposer une valeur maximale et/ou une valeur minimale à la valeur moyenne de pente.

L'invention sera mieux comprise à l'étude d'un mode de réalisation pris à titre d'exemple nullement limitatif illustré par les dessins annexés sur lesquels :

la figure 1 montre les principaux éléments d'un système de sélection de lois de passage suivant l'invention.
la figure 2 illustre un exemple de courbes de profils de pentes évalués suivant l'invention, et la courbe correspondante de lois de passages sélectionnées conformément à l'invention.
la figure 3 est un exemple d'organigramme de fonctionnement d'un système de sélection de lois de passages selon l'invention.

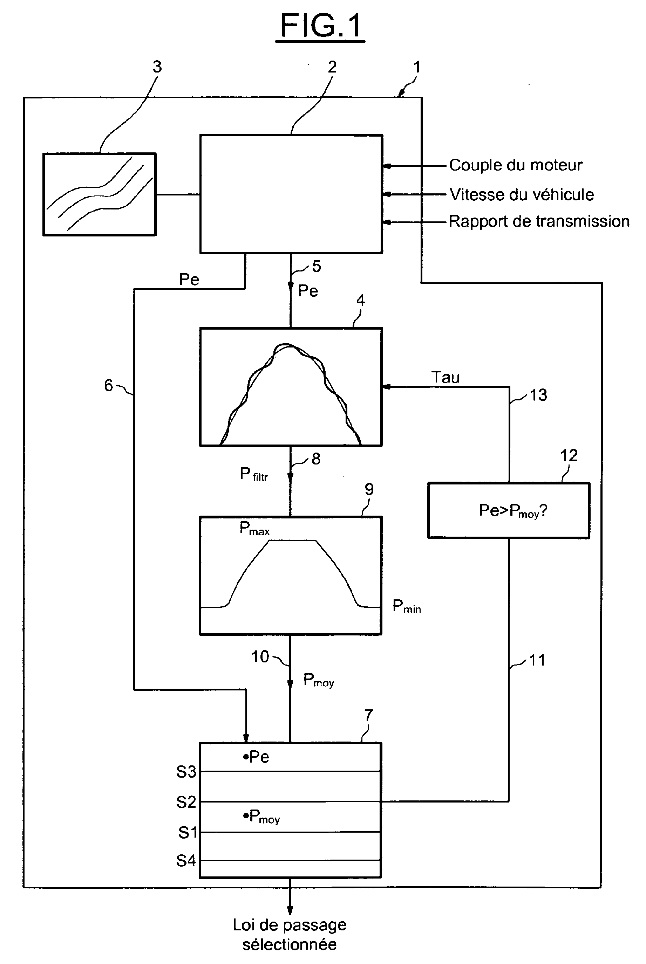

Tel qu'il est illustré sur la figure 1, un système de sélection de lois de passages 1 appartenant à un système de commande (non représenté) de transmission automatique d'un véhicule comprend un bloc de calcul 2 de la pente courante sur laquelle circule le véhicule relié à une cartographie 3 d'efforts résistants auxquels est soumis le véhicule en fonction de sa vitesse. Le bloc de calcul 2 de la pente courante est relié par une connexion 5 à un filtre 4. Il est également relié par une connexion 6 à un comparateur 7. Le filtre 4 est relié par une connexion 8 à un bloc de seuillage 9, lui-même relié par une connexion 10 au comparateur 7. Le comparateur 7 est relié par une connexion 11 à un sélecteur de constante de temps 12 qui renvoie une valeur de constante de temps Tau au filtre 4 par une connexion 13.

Le système de commande de la transmission automatique dispose de quatre cartographies mémorisées de lois de passage définissant des rapports optimaux de la transmission du véhicule dans le plan vitesse du véhicule/charge du moteur du véhicule (charge repérée par exemple par la position de la pédale d'accélérateur, le couple du moteur, la puissance du moteur...). Une cartographie de loi de passage de descente définit des régions de rapports de transmission optimaux quand le véhicule se déplace sur route descendante. Une cartographie de loi de passage de terrain horizontal définit des régions de rapports de transmission optimaux quand le véhicule se déplace sur route plane. Une cartographie de loi de passage de montée définit des régions de rapports de transmission optimaux quand le véhicule se déplace sur route ascendante. Une quatrième cartographie de loi de passage intermédiaire est définie à partir de la cartographie de terrain horizontal et de la cartographie de montée, telle que les frontières définissant les régions de rapports de transmissions sur cette quatrième cartographie, soient comprises entre les frontières correspondantes de la cartographie de loi de passage de terrain horizontal et de la cartographie de loi de passage de montée.

Le bloc de calcul 2 de la pente courante reçoit en entrée la valeur du couple du moteur, la vitesse d'avancement du véhicule, et le rapport engagé de la transmission du véhicule. Le couple du moteur est estimé par le moteur, la vitesse du véhicule est estimée par le calculateur de l'ABS. Ces données sont transmises au bloc 2 via le réseau multiplexé ou tout autre moyen de communication entres calculateurs. En dérivant par rapport au temps la vitesse du véhicule, le bloc 2 en déduit l'accélération du véhicule. A partir de cette accélération, du couple du moteur et du rapport de transmission engagé, de la masse du véhicule, des inerties du moteur et de la boîte de vitesses, ainsi que des efforts résistants extraits de la cartographie 3, le bloc 2 calcule une pente courante de la chaussée sur laquelle circule le véhicule, par exemple par la méthode décrite dans la demande de brevet FR2801952 au nom de la demanderesse. La masse du véhicule ainsi que les inerties moteur et boîte sont des données fixes mémorisées par le bloc 2. La valeur Pe de pente courante ainsi calculée est envoyée par les connexions 5 et 6 au filtre 4 et au comparateur 7. Le filtre 4 calcule une valeur filtrée de pente $P_{filtr}$ par exemple par filtrage classique du premier ordre avec une constante de temps Tau, de la pente courante Pe calculée par le bloc 2.

Le filtre 4 peut être de type filtre passe bas, et le filtrage du premier ordre peut s'effectuer par la méthode suivante :

$$y(t) = K * x(t) + (1 - K) * y(t - 1)$$

Avec : *K*=1-exp(-*SampleTime/Tau*)
Et :

y(t) = $P_{filtr}$(t): sortie du filtre passe bas exprimée à l'instant t

y(t-1) = $P_{filtr}$ (t-1): sortie du filtre passe bas exprimée à l'instant t-1, c'est-à-dire au pas de calcul précédent

x(t) = Pe(t): entrée du filtre passe bas exprimée à l'instant t

K : gain du filtre

SampleTime : période de calcul du filtre, temps séparant les instants de calcul t et t-1

Tau : constante de temps du filtre passe bas.

Cette stratégie de calcul de la pente moyenne permet d'obtenir une valeur $P_{filtr}$ reflétant la durée pendant laquelle le véhicule a circulé sur une route en pente, ainsi que l'importance de l'inclinaison de cette pente. Plus le pourcentage de la montée est important, plus la pente moyenne atteindra une valeur élevée rapidement. Au retour du véhicule sur route plane, la décroissance de la pente moyenne sera fonction de la valeur maximale atteinte par $P_{filtr}$ en fin de montée, donc du pourcentage de pente de la route, ainsi que de la durée (ou de la distance) pendant laquelle le véhicule a circulé sur une la portion de chaussée ascendante.

La valeur de pente filtrée issue du filtre 4 est ensuite envoyée par la connexion 8 au bloc de seuillage 9, qui délivre au comparateur 7, par la connexion 10, une valeur moyenne seuillée de pente $P_{moy}$. En fonction de deux valeurs de seuillage constantes $P_{min}$ et $P_{max}$, le bloc 9 attribue arbitrairement une valeur $P_{min}$ à la valeur de pente moyenne $P_{moy}$ si la pente filtrée $P_{filtr}$ est inférieure à $P_{min}$, attribue arbitrairement une valeur $P_{max}$ à la valeur de pente moyenne $P_{moy}$ si la pente filtrée $P_{filtr}$ est supérieure à $P_{max}$, attribue la valeur $P_{filtr}$ à la valeur $P_{moy}$ dans les autres cas. La valeur $P_{min}$ peut avantageusement être choisie égale à zéro, de manière à obtenir une valeur de pente moyenne $P_{moy}$ positive dès que le véhicule se trouve sur une route ascendante, même si la pente courante a été négative dans les instants précédents. La valeur $P_{max}$ est choisie de façon à ce que lors d'un retour sur le plat du véhicule, la décroissance de la valeur de pente moyenne $P_{moy}$ et son passage en dessous d'un seuil arbitraire ne dure pas plus d'une durée jugée raisonnable par rapport à la stratégie de la gestion des lois de passage. Dans une variante de réalisation, au lieu d'un bloc de filtrage 4 suivi d'un bloc de seuillage 9, on peut utiliser un bloc de filtrage avec seuillage intégré. On peut également, dans cette configuration, utiliser les valeurs filtrées seuillées des instants de calcul précédents pour le calcul de la valeur filtrée courante.

Le comparateur 7 reçoit la valeur Pe de pente courante et la valeur $P_{moy}$ de pente moyenne par les connexions 6 et 10 respectivement. Le comparateur 7 effectue une première comparaison pour déterminer si la valeur de pente courante Pe est supérieure à la valeur de pente moyenne $P_{moy}$. Le résultat est envoyé sous forme de booléen par la connexion 11 au sélecteur de constante de temps 12, qui délivre une constante de temps Tau au filtre 4 par la connexion 13. Le sélecteur 12 attribue une première valeur $Tau_{incrém}$ à la constante de temps Tau si Pe> $P_{moy}$, et attribue à la constante de temps Tau une deuxième valeur $Tau_{decrém}$ inférieure à $Tau_{incrém}$ dans le cas contraire. Il est à noter que le test Pe> $P_{moy}$, pourrait être remplacé par un test $P_{moy}$(t-1)< $P_{moy}$(t), c'est-à-dire un test pour savoir si la pente moyenne est croissante entre l'instant de calcul précédent t-1 et l'instant de calcul courant t. La sélection de la constante de filtrage Tau pourrait également s'effectuer sur la base de tests Pe> $P_{filtr}$ ou $P_{filtr}$(t-1)< $P_{filtr}$(t) sans changer notablement le résultat du procédé. De cette manière, la valeur délivrée par le filtre 4 est calculée avec une constante de temps plus longue quand le véhicule est sur une portion de route ascendante, et avec une constante de temps plus courte quand le véhicule est sur une portion de route plane ou descendante.

Le sélecteur 7 effectue également une comparaison des deux valeurs de pente courante Pe et de pente moyenne $P_{moy}$ par rapport à quatre valeurs de seuil S1, S2, S3 et S4 constantes et telles que S4<S1<S2<S3. En fonction des positions respectives de la pente courante et de la pente moyenne par rapport aux quatre valeurs de seuils, le sélecteur 7 désigne la loi de passage (montée, intermédiaire, terrain horizontal ou descente) que le système de commande doit utiliser pour déterminer le rapport optimal à appliquer à la transmission.

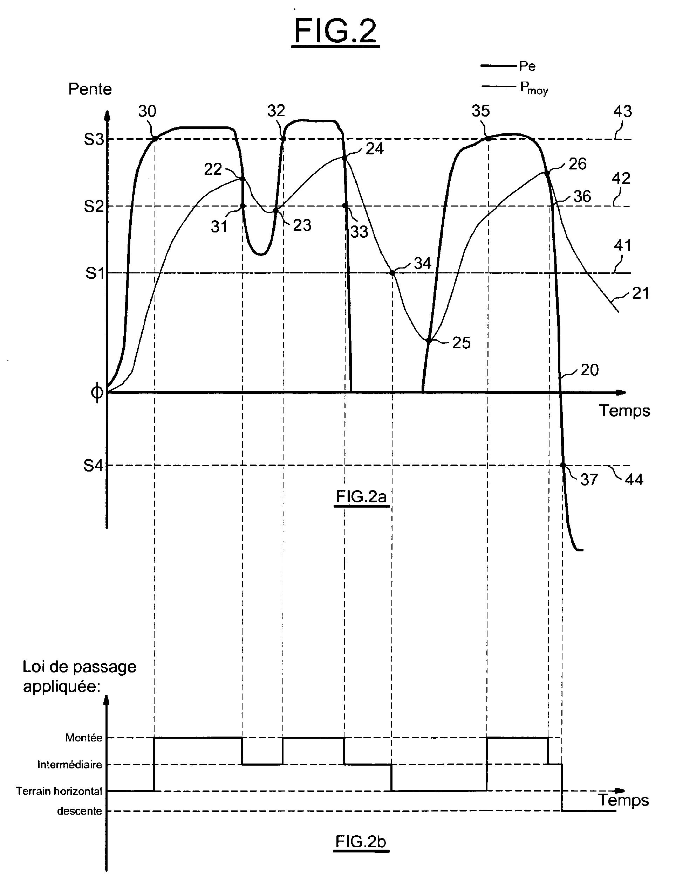

Sur la figure 2a est illustré un exemple de courbe de profil de pente courante 20 en trait gras, et un exemple de courbe de profil de pente moyenne 21 calculé suivant l'invention à partir du profil de pente courante, en trait fin. Les valeurs de pentes (valeurs angulaires, ou en pourcentage de pente, en ordonnées) sont reportées en fonction des instants de calcul (en abscisses). Le point 0 désigne l'origine (abscisse et ordonnée) du graphique. Les points 22, 23, 24, 25, 26 repèrent les points de croisement des deux courbes 20 et 21, qui sont aussi les points où la courbe 21 change de signe de variation : de croissante elle devient décroissante, ou inversement.

Les points 30, 31, 32, 33, 34, 35, 36 repèrent les croisements de la courbe 20 ou de la courbe 21 avec les lignes horizontales de seuil 41, 42, 43, 44 qui amènent le comparateur 7 de la figure 1 à changer la loi de passage sélectionnée.

Sur la figure 2b sont représentées, sous forme de marches d'escalier à quatre niveaux, les quatre lois de passage sélectionnées (montée, intermédiaire, terrain horizontal ou descente) pendant les intervalles de temps correspondant aux abscisses des points remarquables 30, 31, 32, 33, 34, 35 et 36 de la figure 2a.

La sélection des lois de passage correspondant aux courbes 20 et 21 de la figure 2a est effectuée comme suit :

La loi de passage initialement sélectionnée est la loi de terrain horizontal. A l'instant 0, le bloc de calcul 2 de la figure 1 commence à calculer les valeurs de pente courante reportées sur la courbe 20. L'ensemble du filtre 4 et du bloc de seuillage 9 de la figure 1 calculent les valeurs de pente moyenne reportée sur la courbe 21, par un filtrage de constante de temps imposé par le sélecteur 12 de la figure 1. Sur les intervalles 0-22, 23-24 et 25-26, où la courbe 21 est croissante, le sélecteur de constante de temps 12 de la figure 1 impose la constante de temps de filtrage $Tau_{incrém}$; sur les intervalles 22-23, et 24-25, où la courbe 21 est décroissante, le sélecteur impose la constante de temps de filtrage $Tau_{decrém}$. Lorsqu'au point 30, au point 32 ou au point 35, la courbe 20 passe au dessus de la ligne 43 correspondant au seuil S3, le comparateur 7 sélectionne la loi de passage de montée. Cette loi de passage de montée est ensuite maintenue tant que la courbe 20 reste au dessus de la ligne 42 correspondant au seuil S2. Quand, au point 31 ou au point 33, la courbe 20 passe en dessous de la ligne 42, le comparateur 7 sélectionne la loi de passage intermédiaire. La loi de passage intermédiaire est maintenue jusqu'à ce que

- soit la courbe 20 revienne au dessus de la ligne 43 (sélection de la loi de passage de montée) (point 32);
- soit la courbe 21 descende en dessous de la ligne 41 correspondant au seuil S1 : le comparateur sélectionne alors la loi de passage de terrain horizontal (point 34);
- soit la courbe 20 passe en dessous de la ligne 44 correspondant au seuil S4 : le comparateur sélectionne alors la loi de passage de descente (point 37).

Quand les valeurs de pente courante augmentent à nouveau à partir de valeurs inférieures à S4, la loi de passage de terrain horizontal est sélectionnée quand la courbe 20 passe à nouveau au dessus de la ligne 44 correspondant au seuil S4 (cas de figure non représenté). Cette loi de terrain horizontal est maintenue jusqu'à ce que :

- soit la courbe 20 revienne au dessus de la ligne 43 (sélection de la loi de passage de montée, comme au point 35);
- soit la courbe 20 passe à nouveau en dessous de la ligne 44 correspondant au seuil S4 (sélection de la loi de passage de descente à partir de la loi de passage de terrain plat, cas non représenté).

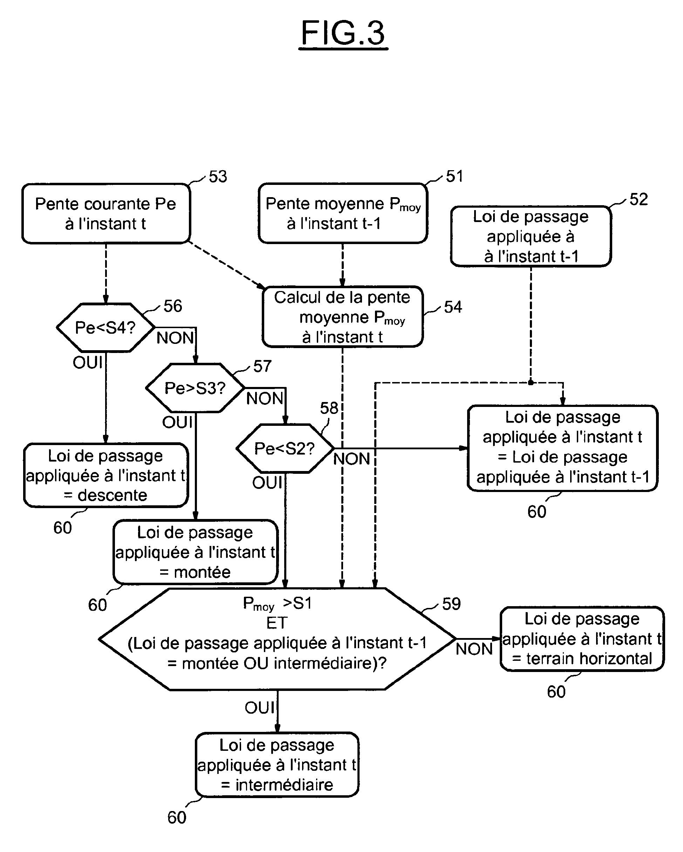

La figure 3 représente sous forme d'organigramme de fonctionnement un système de sélection de lois de passages selon l'invention. Les blocs 51 et 52 représentent les valeurs mémorisées à l'étape de calcul précédents (instant t-1) pour la valeur de pente moyenne et la loi de passage sélectionnée. Les blocs 53 et 54 représentent les nouvelles valeurs de pente courante et de pente moyenne calculées à l'étape de calcul en cours (instant t). A partir des valeurs des blocs 52, 53, 54, des blocs logiques 56, 57, 58, 59 permettent de sélectionner une valeur 60 pour la loi de passage à l'instant de calcul actuel (instant t). Les blocs 56, 57, 58 effectuent des tests sur la seule valeur de pente courante Pe. Si le résultat est positif respectivement pour l'un des blocs 56 ou 57, une loi de passage est sélectionnée, respectivement descente ou montée. Si les tests des trois blocs 56, 57, 58 sont négatifs, la loi de passage est maintenue à sa valeur antérieure. Si les tests des blocs 56 et 57 sont négatifs et que le test du bloc 58 est positif, un nouveau test est effectué au bloc 59, qui fait intervenir les trois valeurs calculées ou mémorisées des blocs 52, 53 et 54, et qui sélectionne une loi de passage parmi la loi de terrain horizontal et la loi intermédiaire entre terrain horizontal et montée.

L'organigramme de la figure 3 peut être appliqué pour calculer les lois de passage sélectionnées sur la figure 2. Le mode de sélection décrit pour la figure 2 prend en compte la valeur à l'instant de calcul précédent (instant t-1) de la pente courante pour sélectionner la loi de passage à l'instant de calcul actuel (instant t). Dans le mode de fonctionnement décrit à la figure 3, c'est la loi de passage à l'instant de calcul précédent (instant t-1) qui est mémorisée pour intervenir dans la sélection de la loi de passage à l'instant de calcul actuel (instant t). De fait, les deux modes de sélection sont équivalents.

Le dispositif de la présente invention permet de limiter le nombre de changements de rapports déclenchés par la commande automatique de la transmission du véhicule lorsqu'une route ascendante présente une courte rupture de pente. Le véhicule conserve ainsi sa réserve de puissance pour attaquer la suite de la montée, et le confort acoustique du conducteur se trouve amélioré.

**Revendications**

1.  Procédé de commande d'une transmission automatique de véhicule automobile en fonction du profil de la chaussée sur laquelle se déplace le véhicule, comprenant une opération de détermination (53) de la pente courante de la chaussée, une opération de filtrage (54) de cette pente courante pour obtenir une pente moyenne calculée, **caractérisé en ce que** l'on compare (57, 58) la pente courante à un premier seuil (S3) et à un second seuil (S2) inférieur au premier, et l'on compare (59) la pente moyenne calculée à un troisième seuil (S1) inférieur aux deux seuils précités, de façon à imposer à la transmission au moins une loi de passage de montée si la pente courante est supérieure au premier seuil (S3), au moins une loi de passage de terrain horizontal si la pente courante et la pente moyenne calculée sont inférieures respectivement au second (S2) et au troisième seuil (S1), et au moins une loi de passage intermédiaire entre la loi de montée et la loi de terrain horizontal si la pente courante est inférieure au second seuil (S2) et simultanément la pente moyenne calculée est supérieure au troisième seuil (S1).

2.  Procédé selon la revendication 1, dans lequel le choix de la loi de passage à un instant t est en outre fonction de la loi de passage appliquée à l'instant de calcul précédent cet instant t.

3.  Procédé selon la revendication 1 ou 2, dans lequel le filtrage de la pente courante est effectué avec au moins une première constante de temps quand la pente moyenne calculée est croissante et avec au moins une deuxième constante de temps inférieure à la première quand la pente moyenne calculée est décroissante.

4.  Procédé selon l'une des revendications précédentes, dans lequel la pente moyenne calculée est arbitrairement maintenue au dessus d'une valeur minimale.

nimale.

5.  Procédé selon l'une des revendications précédentes, dans lequel la pente moyenne calculée est arbitrairement maintenue en dessous d'une valeur maximale.

6.  Procédé selon l'une des revendications précédentes, dans lequel on compare (56) en outre la valeur algébrique de la pente courante à un quatrième seuil négatif (S4), et l'on impose à la transmission au moins une loi de passage de descente différente des trois lois de passage précitées quand la pente courante est inférieure audit quatrième seuil.

7.  Procédé selon l'une des revendications précédentes, dans lequel l'estimation de la pente courante est effectuée en fonction de la masse du véhicule, des inerties du moteur et de la boîte de vitesse du véhicule, du couple du moteur, de la dérivée de la vitesse longitudinale du véhicule, du rapport de la transmission, à l'aide d'une cartographie des efforts résistants auxquels est soumis le véhicule en fonction de sa vitesse.

8.  Système de commande d'une transmission automatique de véhicule automobile comprenant un moyen d'estimation du couple du moteur et un moyen d'estimation de l'accélération du véhicule, une cartographie (3) des efforts résistants auxquels est soumis le véhicule en fonction de sa vitesse, des cartographies mémorisées de lois de passage de la transmission adaptées à différents profils routiers, et un système de sélection (1) de lois de passage configuré pour déterminer, à l'aide dudit couple du moteur, de ladite accélération, de ladite cartographie d'efforts résistants, et du rapport de transmission engagé, une pente courante de la chaussée sur laquelle se déplace le véhicule, **caractérisé en ce que** ledit système de sélection de lois de passage comporte un filtre (4) délivrant une valeur moyenne de cette pente courante, et ledit système de sélection de lois de passage est configuré pour imposer à la transmission au moins une loi de passage de montée si la pente courante est supérieure à un premier seuil (S3), au moins une loi de passage de terrain horizontal si la pente courante et la valeur moyenne de pente sont inférieures respectivement à un deuxième seuil (S2) inférieur au premier et à un troisième seuil (S1) inférieur au deuxième, et au moins une loi de passage intermédiaire entre la loi de montée et la loi de terrain horizontal si la pente courante est inférieure au deuxième seuil (S2) et simultanément la valeur moyenne de pente est supérieure au troisième seuil (S1).

9.  Système selon la revendication précédente, dans lequel le filtre est relié à un sélecteur (12) de constante de temps configuré pour sélectionner une première constante de temps quand la valeur moyenne de pente est croissante, et pour sélectionner une deuxième constante de temps inférieure à la première quand la valeur moyenne de pente est décroissante.

10. Système selon l'une des revendications 8 ou 9, dans lequel le filtre est apte à imposer une valeur maximale et/ou une valeur minimale à la valeur moyenne de pente.


**Patentansprüche**

1. Verfahren zur Steuerung eines Kraftfahrzeug-Automatikgetriebes abhängig vom Profil der Straße, auf der das Fahrzeug sich bewegt, das einen Vorgang der Ermittlung (53) der laufenden Steigung der Straße und einen Vorgang der Filterung (54) dieser laufenden Steigung enthält, um eine berechnete mittlere Steigung zu erhalten, **dadurch gekennzeichnet, dass** die laufende Steigung mit einer ersten Schwelle (S3) und mit einer zweiten Schwelle (S2) niedriger als die erste verglichen wird (57, 58), und dass die berechnete mittlere Steigung mit einer dritten Schwelle (S1) niedriger als die zwei oben genannten Schwellen verglichen wird (59), um dem Getriebe mindestens ein Steigungs-Schaltgesetz, wenn die laufende Steigung höher als die erste Schwelle (S3) ist, mindestens ein Schaltgesetz auf waagrechtem Gelände, wenn die laufende Steigung und die berechnete mittlere Steigung niedriger als die zweite (S2) bzw. dritte Schwelle (S1) sind, und mindestens ein Zwischenschaltgesetz zwischen dem Steigungsgesetz und dem Gesetz auf waagrechtem Gelände aufzuzwingen, wenn die laufende Steigung niedriger als die zweite Schwelle (S2), und gleichzeitig die berechnete mittlere Steigung höher als die dritte Schwelle (S1) ist.

2. Verfahren nach Anspruch 1, wobei die Wahl des Schaltgesetzes zu einem Zeitpunkt t außerdem von dem zum vor diesem Zeitpunkt t liegenden Rechenzeitpunkt angewendeten Schaltgesetz abhängt.

3. Verfahren nach Anspruch 1 oder 2, wobei die Filterung der laufenden Steigung mit mindestens einer ersten Zeitkonstante, wenn die berechnete mittlere Steigung zunimmt, und mit mindestens einer zweiten Zeitkonstante niedriger als die erste ausgeführt wird, wenn die berechnete mittlere Steigung abnimmt.

4. Verfahren nach einem der vorhergehenden Ansprüche, wobei die berechnete mittlere Steigung willkürlich über einem Minimalwert gehalten wird.

5. Verfahren nach einem der vorhergehenden Ansprüche, wobei die berechnete mittlere Steigung willkürlich unter einem Maximalwert gehalten wird.

6. Verfahren nach einem der vorhergehenden Ansprüche, wobei außerdem der algebraische Wert der laufenden Steigung mit einer vierten negativen Schwelle (S4) verglichen wird (56), und dem Getriebe mindestens ein Herunterschaltgesetz aufgezwungen wird, das sich von den drei oben genannten Schaltgesetzen unterscheidet, wenn die laufende Steigung niedriger als die vierte Schwelle ist.

7. Verfahren nach einem der vorhergehenden Ansprüche, wobei die Schätzung der laufenden Steigung abhängig von der Masse des Fahrzeugs, den Trägheiten des Motors und des Getriebes des Fahrzeugs, dem Drehmoment des Motors, der Ableitung der Längsgeschwindigkeit des Fahrzeugs, dem Gang des Getriebes, mit Hilfe eines Kennfelds der Widerstandskräfte ausgeführt wird, denen das Fahrzeug abhängig von seiner Geschwindigkeit ausgesetzt ist.

8. System zur Steuerung eines Kraftfahrzeug-Automatikgetriebes, das eine Einrichtung zur Schätzung des Drehmoments des Motors und eine Einrichtung zur Schätzung der Beschleunigung des Fahrzeugs, ein Kennfeld (3) der Widerstandskräfte, denen das Fahrzeug abhängig von seiner Geschwindigkeit ausgesetzt ist, gespeicherte Kennfelder von Schaltgesetzen des Getriebes, die an verschiedene Straßenprofile angepasst sind, und ein Auswahlsystem (1) von Schaltgesetzen enthält, das konfiguriert ist, um mit Hilfe des Drehmoments des Motors, der Beschleunigung, des Kennfelds von Widerstandskräften und des eingelegten Gangs eine laufende Steigung der Straße zu bestimmen, auf der das Fahrzeug sich bewegt, **dadurch gekennzeichnet, dass** das Auswahlsystem von Schaltgesetzen einen Filter (4) aufweist, der einen Mittelwert dieser laufenden Steigung liefert, und das Auswahlsystem von Schaltgesetzen konfiguriert ist, um dem Getriebe mindestens ein Steigungs-Schaltgesetz, wenn die laufende Steigung höher als eine erste Schwelle (S3) ist, mindestens ein Schaltgesetz auf waagrechtem Gelände, wenn die laufende Steigung und der Steigungsmittelwert niedriger als eine zweite Schwelle (S2) niedriger als die erste, bzw. eine dritte Schwelle (S1) niedriger als die zweite sind, und mindestens ein Zwischenschaltgesetz zwischen dem Steigungsgesetz und dem Gesetz auf waagrechtem Gelände aufzuzwingen, wenn die laufende Steigung niedriger als die zweite Schwelle (S2) und gleichzeitig der Steigungsmittelwert höher als die dritte Schwelle (S1) ist.

9. System nach dem vorhergehenden Anspruch, wobei der Filter mit einem Wählschalter (12) mit Zeitkonstante verbunden ist, der konfiguriert ist, um eine erste Zeitkonstante zu wählen, wenn der Steigungsmittelwert zunehmend ist, und um eine zweite Zeitkonstante niedriger als die erste zu wählen, wenn der Steigungsmittelwert abnehmend ist.

10. System nach einem der Ansprüche 8 oder 9, wobei der Filter dem Steigungsmittelwert einen maximalen und/oder einen minimalen Wert aufzwingen kann.


**Claims**

1. Method for controlling a motor vehicle automatic transmission as a function of the profile of the roadway on which the vehicle is moving, comprising an operation (53) for determining the current slope of the roadway, an operation (54) for filtering this current slope to obtain a calculated average slope, **characterized in that** the current slope is compared (57, 58) to a first threshold (S3) and to a second threshold (S2) lower than the first, and the calculated average slope is compared (59) to a third threshold (S1) lower than the abovementioned two thresholds, so as to impose on the transmission at least one climb shift law if the current slope is above the first threshold (S3), at least one horizontal terrain shift law if the current slope and the calculated average slope are respectively lower than the second (S2) and than the third (S1) thresholds, and at least one intermediate shift law between the climb law and the horizontal terrain law if the current slope is lower than the second threshold (S2) and simultaneously the calculated average slope is higher than the third threshold (S1).

2. Method according to Claim 1, in which the choice of the shift law at an instant t is also the function of the shift law applied to the calculation instant preceding this instant t.

3. Method according to Claim 1 or 2, in which the filtering of the current slope is performed with at least one first time constant when the calculated average slope is increasing and with at least one second time constant lower than the first when the calculated average slope is decreasing.

4. Method according to one of the preceding claims, in which the calculated average slope is arbitrarily maintained above a minimum value.

5. Method according to one of the preceding claims, in which the calculated average slope is arbitrarily maintained below a maximum value.

6. Method according to one of the preceding claims, in which, in addition, the algebraic value of the current slope is compared (56) to a fourth negative threshold (S4), and the transmission has imposed upon it at least one descent shift law different from the abovementioned three shift laws when the current slope is lower than said fourth threshold.

7. Method according to one of the preceding claims, in which the estimation of the current slope is performed as a function of the weight of the vehicle, of the inertias of the engine and of the gearbox of the vehicle, of the engine torque, of the longitudinal speed drift of the vehicle, of the transmission ratio, using a mapping of the resisting forces to which the vehicle is subject as a function of its speed.

8. System for controlling a motor vehicle automatic transmission comprising a means for estimating the engine torque and a means for estimating the acceleration of the vehicle, a mapping (3) of the resisting forces to which the vehicle is subject as a function of its speed, stored mappings of transmission shift laws suited to different road profiles, and a system (1) for selecting shift laws configured to determine, using said engine torque, said acceleration, said mapping of resisting forces, and the engaged transmission ratio, a current slope of the roadway on which the vehicle is moving, **characterized in that** said system for selecting shift laws comprises a filter (4) delivering an average value of this current slope, and said system for selecting shift laws is configured to impose on the transmission at least one climb shift law if the current slope is higher than a first threshold (S3), at least one horizontal terrain shift law if the current slope and the average slope value are lower, respectively, than a second threshold (S2) lower than the first and than a third threshold (S1) lower than the second, and at least one intermediate shift law between the climb law and the horizontal terrain law if the current slope is lower than the second threshold (S2) and simultaneously the average slope value is higher than the third threshold (S1).

9. System according to the preceding claim, in which the filter is linked to a time constant selector (12) configured to select a first time constant when the average slope value is increasing, and to select a second time constant lower than the first when the average slope value is decreasing.

10. System according to one of Claims 8 and 9, in which the filter is suitable for imposing a maximum value and/or a minimum value on the average slope value.

# FIG.1

Couple du moteur
Vitesse du véhicule
Rapport de transmission

Pe

Pe

Tau — 13

$P_{filtr}$

$P_{max}$

$P_{min}$

Pe>$P_{moy}$? — 12

$P_{moy}$

11

•Pe

S3

S2

•$P_{moy}$

S1

S4

Loi de passage
sélectionnée

# FIG.2

—— Pe

—— P$_{moy}$

Pente

30    32    35    43

S3

24

22

26    42

S2

31    23    33    36

S1    34

41

21

25

20

ϕ

Temps

S4

37    44

FIG.2a

Loi de passage
appliquée:

Montée

Intermédiaire

Terrain horizontal

Temps

descente

FIG.2b

# FIG.3

## RÉFÉRENCES CITÉES DANS LA DESCRIPTION

**Documents brevets cités dans la description**

- FR 2801952
- US 20060030992 A
- US 20070118267 A